Europäisches Patentamt

European Patent Office

Office européen des brevets

(19)

(11) Veröffentlichungsnummer: **0 168 026**
**B1**

(12) **EUROPÄISCHE PATENTSCHRIFT**

(45) Veröffentlichungstag der Patentschrift:
07.12.88

(51) Int. Cl.⁴: **B 05 D 3/12,** B 05 D 5/06

(21) Anmeldenummer: 85108502.7

(22) Anmeldetag: 09.07.85

(54) Verfahren zur Herstellung einer kratzfesten Beschichtung auf einem flächenhaften Gebilde aus thermoplastischem Material.

(30) Priorität: 13.07.84 CH 3412/84

(43) Veröffentlichungstag der Anmeldung:
15.01.86 Patentblatt 86/3

(45) Bekanntmachung des Hinweises auf die Patenterteilung:
07.12.88 Patentblatt 88/49

(84) Benannte Vertragsstaaten:
AT BE DE FR GB IT NL SE

(56) Entgegenhaltungen:
EP-A- 0 070 267
GB-A- 610 962

(73) Patentinhaber: **Gurit-Worbla AG,**
**Papiermühlestrasse 155, CH-3063 Ittigen (CH)**

(72) Erfinder: **Herczeg, Julius-Ludwig, Eggweg 13,**
**CH-3065 Bolligen (CH)**
Erfinder: **Lenhard, Martin, Sonnenrain, CH-3063 Ittigen**
**(CH)**
Erfinder: **Flückiger, Ernst, Fliederweg 6, CH-3125 Toffen**
**(CH)**

(74) Vertreter: **Ryffel, Rolf, c/o Hepp Ryffel AG**
**Bahnhofstrasse 58, CH-8001 Zürich (CH)**

## Beschreibung

Die Erfindung betrifft ein Verfahren zur Herstellung einer kratzfesten Beschichtung auf einem flächenhaften Gebilde aus thermoplastischem Material.

Ungeschützte Oberflächen von Gebilden aus thermoplastischem Material haben in der Regel einen ungenügenden Kratzwiderstand, sie werden leicht angekratzt und dadurch schlecht durchsichtig oder undurchsichtig.

Für die Beurteilung der Kratzfestigkeit kann der Sandrieseltest nach DIN 52348 und die anschliessende Ermittlung des relativen Leuchtdichtekoeffizienten nach DIN 4646/2 herangezogen werden.

Beispielweise für Helmvisiere fordert man nach DIN 58218 für den relativen Leuchtdichtekoeffizienten einen Wert von

$$<5 \ \frac{cd}{m^2.1\times} \ .$$

Es gehört zum Stand der Technik, Oberflächen von Gebilden aus thermoplastischem Material mit dünnen Überzügen gegen Kratzer zu schützen.

Beispielsweise wird in der US-PS 3 451 838 ein Verfahren mit thermisch härtbaren Polysiloxanen beschrieben.

Die DE-PS 20 58 504 beschreibt ein Beschichtungsverfahren, in dem Polyurethan als Weich-Beschichtung zum Einsatz kommt.

In der DE-OS 29 28 512 werden UV-härtbare Lacke, z.B. auch Acryllack, für das Beschichten von thermoplastischen Materialien vorgeschlagen.

Dieses letztgenannte Verfahren zum Herstellen von kratzfesten Beschichtungen aus UV-gehärteten Acrylharzen erweist sich in der Praxis als das in der Durchführung einfachste, sauberste und wirtschaftlichste Verfahren. Es werden u.a. keine Lösungsmittel benötigt.

Leider muss aber festgestellt werden, dass bei Verwendung von lösungsmittelfreien UV-härtbaren Lacken die heute für bahnförmige, flächenhafte Gebilde (z.B. Platten oder Folien) üblichen Beschichtungstechniken zu einer optisch ungenügenden Oberfläche der ausgehärteten Beschichtung führen.

Für viele Anwendungen ist jedoch eine optisch einwandfreie Oberflächenqualität unabdingbar.

Um auf einem Gebilde aus thermoplastischem Material, nämlich einer optischen Linse, eine kratzfeste Beschichtung mit optisch einwandfreier Oberfläche zu erzeugen, wird in der GB-A-610 962 vorgeschlagen, das Gebilde mit einem 3d-vernetzbaren Harz (teilweise polymerisiertes Allylmethacrylat) zu beschichten und dann zwischen geheizte polierte Formflächen zu verbringen, zwischen welchen das beschichtete Gebilde gepresst und dabei das 3d-vernetzbare Harz ausgehärtet wird. Ein wesentlicher Nachteil eines solchen Verfahrens besteht darin, dass es insbesondere bei grösseren Gebilden schwierig ist, zwischen dem Auftragen des 3d-vernetzbaren Harzes und dem Aushärten desselben in der Form Verunreinigungen und Reaktionen des Harzes mit Fremdstoffen, die in der Umgebung und auch noch in der Form vorhanden sein können, zu verhindern.

Dieser Nachteil wird mit dem erfindungsgemässen, im Patentanspruch 1 angegebenen Verfahren vermieden.

In diesem Verfahren kann das 3d-vernetzbare Harz unmittelbar nach dem Auftragen auf das flächenhafte Gebilde aus thermoplastischem Material ausgehärtet werden, vorzugsweise in sehr kurzer Zeit durch Bestrahlung z.B. mit UV. Das ausgehärtete Harz ist dann trocken und nicht mehr reaktionsfähig, so dass Verunreinigungen und Reaktionen mit Fremdstoffen praktisch nicht mehr auftreten können. Obwohl bekannterweise die Härtung zu dreidimensional vernetzten Systemen führt, ist überraschenderweise gefunden worden, dass mit dem angegebenen Verfahren z.B. unter Zuhilfenahme einer herkömmlichen Flächenpresse oder einer kontinuierlich arbeitenden sog. Doppelbandpresse, die für verschiedene Anwendungszwecke notwendige optische Qualität – Glättung – erreicht werden kann, und zwar auch dann, wenn mit den üblichen Beschichtungstechniken gearbeitet wird.

Mit dem Verfahren können kratzfeste Beschichtungen ein- oder beidseitig auf flächenhaften, flexiblen oder starren Gebilden aus verschiedenen thermoplastischen Materialien in optisch einwandfreier Qualität hergestellt werden.

Die besten Ergebnisse werden bei Behandlungstemperaturen deutlich über der Glastemperatur des jeweiligen thermoplastischen Materials erzielt. Dabei wird stets ein gleichmässiger Flächendruck auf das beschichtete Gebilde ausgeübt (im Gegensatz zu einem Liniendruck, etwa zwischen Kalanderwalzen). Beispielsweise kann an einer mit einem UV-härtbaren Acrylharz beschichteten Cellulosepropionat-Platte nach dem Aushärten der Beschichtung mit anschliessendem Pressen zwischen polierten Oberflächen eine optisch einwandfreie Oberfläche der Beschichtung mit einer Kratzfestigkeit von

$$3,2 \ \frac{cd}{m^2.1\times}$$

nach DIN erhalten werden.

Beispiel 1

Eine 1 mm dicke Cellulosepropionat-Platte wird nach einer der heute üblichen Beschichtungstechniken mit einem UV-härtbaren Lack beschichtet. Der Lackauftrag beträgt $10 \pm 2 \ g/m^2$. Der Lack hat die folgende Zusammensetzung:

45 Gew.% Epoxidacrylat («Ebecryl 608»)
2 Gew.% Siliconacrylat («IRR 49»)
45 Gew.% Hexandioldiacrylat
4 Gew.% Benzophenon
4 Gew.% Photosensibilisator «Darocure 1173»
(= 1-Phenyl-2-hydroxy-2-methyl-propan-1-on)

Die Platte wird anschliessend mit einer UV-Anlage, z.B. ausgerüstet mit einem IST-Strahler, Leistung 80W/cm, bei einer Bahngeschwindigkeit von 10 m/min. belichtet.

Die ausgehärtete Lackschicht hat eine optisch nicht befriedigende Oberfläche. Um diese zu verbessern, wird die Platte anschliessend in einer konventionellen Flächenpresse zwischen polierten Pressblechen oder in einer Doppelbandpresse zwischen polierten Bändern bei einer Temperatur von 150°C mit einem Druck von 30 bar gepresst.

Es resultiert eine optisch einwandfreie Oberfläche mit einer Kratzfestigkeit von

$$3,2 \ \frac{cd}{m^2 . 1 \times}$$

nach DIN 30 58218.

**Beispiel 2**

Die gemäss Beispiel 1 erhaltene, beschichtete, belichtete und geglättete Platte wird in einem Verseifungsbad behandelt. Das Bad besteht aus einer alkalischen Lösung, die mindestens 40 Vol.% bezogen auf Lösungsmittel, eines protischen und/oder dipolar aprotischen Lösungsmittels enthält. Beispielsweise enthält die Lösung auf einen Liter Wasser 40 g NaOH und 630 ml Methanol. Durch die Behandlung entsteht an der nicht beschichteten Oberfläche der Platte eine Celluloseschicht.

Die messtechnische Erfassung des durch die beschriebene Pressbehandlung bewirkten Effektes gelingt nicht ausreichend durch optische Messungen, wie Streuungs- oder Brechungsmessungen. Der Effekt wird aber deutlich durch die visuelle Beurteilung der Durchsichtigkeit und der Oberfläche.

Ferner sind Rauhigkeitsmessungen der beschichteten Oberfläche nach DIN 4768 durchgeführt worden, die den Effekt der Pressbehandlung ebenfalls deutlich zeigen. Die Resultate sind in der nachstehenden Tabelle zusammengestellt, in der jeweils bei a die Rauhigkeitswerte vor der Pressbehandlung und bei b die Rauhigkeitswerte nach der Pressbehandlung angegeben sind.

### Tabelle

| Material der Platte | | Ra-Wert (μm) | Rz-Wert (μm) |
|---|---|---|---|
| Celluloseacetobutyrat | a | 0,14 | 0,53 |
| | b | 0,01 | 0,13 |
| Hart-Polyvinylchlorid | a | 0,18 | 0,80 |
| | b | 0,03 | 0,10 |

## Patentansprüche

1. Verfahren zur Herstellung einer kratzfesten Beschichtung auf einem flächenhaften Gebilde aus thermoplastischem Material, wobei auf das Gebilde ein 3d-vernetzbares Harz aufgetragen und ausgehärtet wird, wobei man nach dem Aushärten des Harzes das beschichtete Gebilde zwischen polierten Oberflächen der Einwirkung von gleichmässigem Flächendruck und Hitze aussetzt, um eine optisch einwandfreie Oberfläche der Beschichtung zu erzielen.

2. Verfahren nach Anspruch 1, dadurch gekennzeichnet, dass die Behandlung zwischen den polierten Oberflächen bei einer Temperatur zwischen der Glastemperatur und der Erweichungstemperatur des thermoplastischen Materials durchgeführt wird.

3. Verfahren nach Anspruch 1, dadurch gekennzeichnet, dass eine Flächenpresse verwendet wird.

4. Verfahren nach Anspruch 1, dadurch gekennzeichnet, dass eine Doppelbandpresse verwendet wird.

5. Verfahren nach einem der Ansprüche 1 bis 4, dadurch gekennzeichnet, dass beide Oberflächen des Gebildes mit dem 3d-vernetzbaren Harz beschichtet werden.

6. Verfahren nach einem der Ansprüche 1 bis 4, dadurch gekennzeichnet, dass nur eine der beiden Oberflächen des Gebildes mit dem 3d-vernetzbaren Harz beschichtet wird.

7. Verfahren nach Anspruch 6, wobei ein Gebilde aus thermoplastischem Celluloseester beschichtet wird, dadurch gekennzeichnet, dass die andere der beiden Oberflächen des Gebildes mit einer alkalischen, verseifenden Lösung behandelt wird.

## Claims

1. Method of producing a scratch resistant coating on a sheetlike product of thermoplastic material, in which a three-dimensionally crosslinkable resin is applied to the product and then cured, wherein, after the curing of the resin, the coated product is subjected to the action of heat and uniform area pressure between polished surfaces to obtain an optically smooth surface of the coating.

2. Method according to Claim 1, characterized in that the treatment between the polished surfaces is effected at a temperature between the glass transition temperature and the softening temperature of the thermoplastic material.

3. Method according to Claim 1, characterized in that a daylight press is used.

4. Method according to Claim 1, characterized in that a continuous laminator press is used.

5. Method according to any one of Claims 1 to 4, characterized in that both surfaces of the product are coated with the three-dimensionally crosslinkable resin.

6. Method according to any one of Claims 1 to 4, characterized in that only one of the two surfaces of the product is coated with the three-dimensionally crosslinkable resin.

7. Method according to Claim 6, in which a product of thermoplastic cellulose ester is coated, characterized in that the other one of the two surfaces of the product is treated with an alkaline saponifying solution.

**Revendications**

1. Procédé de fabrication d'un revêtement résistant à l'abrasion sur un produit plat en matière thermoplastique, une résine réticulable en trois dimensions étant à cette occasion appliquée sur le produit et durcie, après durcissement de la résine, le produit recouvert étant exposé entre des surfaces polies à l'action d'une pression superficielle régulière et de la chaleur, afin d'obtenir une surface optiquement irréprochable du revêtement.

2. Procédé selon la revendication 1, caractérisé en ce que le traitement entre les surfaces polies s'effectue à une température située entre la température de vitrification et la température de ramollissement de la matière thermoplastique.

3. Procédé selon la revendication 1, caractérisé en ce que l'on utilise une presse à surface.

4. Procédé selon la revendication 1, caractérisé en ce que l'on utilise une presse à double bande.

5. Procédé selon l'une des revendications 1 à 4, caractérisé en ce que les deux surfaces du produit sont recouvertes de la résine réticulable en trois dimensions.

6. Procédé selon la revendication 1, caractérisé en ce que seule l'une des deux surfaces du produit est recouverte de la résine réticulable en trois dimensions.

7. Procédé selon la revendication 6, dans lequel un produit en ester cellulosique thermoplastique est recouvert, caractérisé en ce que l'autre des deux surfaces du produit est traitée avec une solution alcaline, saponifiante.